# DEMANDE DE BREVET EUROPEEN

(11) **EP 0 851 697 A1**
(43) Date de publication de la demande: **01.07.1998**
(21) Numéro de dépôt: 97402962.1
(22) Date de dépôt: 08.12.1997
(51) Int. Cl.: H04Q 7/22

(54) **Système de diffusion de messages à partir d'un terminal de radiocommunication mobile**

(30) Priorité: 12.12.1996 FR 9615270
(71) Demandeur: ALCATEL ALSTHOM COMPAGNIE GENERALE D'ELECTRICITE, 75008 Paris (FR)
(72) Inventeur: Khalil, Norbert, 78290 Croissy sur Seine (FR)
(74) Mandataire: El Manouni, Josiane

(57) **Abrégé**

Système permettant de diffuser des messages à partir d'un terminal dans un réseau de radiocommunications mobiles (1) offrant, outre un service de transmission de messages de type point-à-point, un service de diffusion de messages à partir du réseau lui-même, ce système étant caractérisé en ce qu'il comporte des moyens pour indiquer qu'un message de type point-à-point (SMS-MO) issu d'un terminal (2) est à diffuser, et des moyens réagissant à une telle indication pour transformer ce message de type point-à-point en un message ("m") à diffuser par ce réseau.

## Description

La présente invention concerne d'une manière générale les systèmes de radiocommunications mobiles, plus particulièrement les systèmes de radiocommunications mobiles offrant, outre un service de téléphonie, un service de transmission de données, notamment un service de transmission de données sous forme de messages courts, donc plutôt destinés à des terminaux portables.

A titre d'exemple de tels systèmes, on peut notamment citer celui connu sous le nom de GSM (pour:"Global System for Mobile communications").

Ce système offre ainsi un service de transmission de messages courts de type point-à-point, appelé aussi en abrégé SMS-PP (pour:"Short Message Service-Point to Point"), utilisé pour transmettre des messages entre deux utilisateurs, dont l'un est un utilisateur d'un réseau GSM et dont l'autre peut être un utilisateur d'un réseau GSM ou d'un autre réseau offrant également des services de transmission de données.

Ce service SMS-PP de transmission de messages courts est plus précisément défini dans les recommendations GSM 03.40 et 04.11.

Ce système offre en outre un service de diffusion, à partir du réseau lui-même, de messages courts porteurs d'informations d'intérêt général, telles que par exemple des informations sur le trafic routier, ou sur la météo, ce service étant aussi appelé en abrégé SMS-CB (pour:"Short Message Service-Cell Broadcast".

Ce service SMS-CB de diffusion de messages courts est plus précisément défini dans la recommendation GSM 03.41.

La présente invention a notamment pour but de fournir, dans un système de radiocommunications mobiles tel que notamment le système GSM, un nouveau type de service, qui soit un service de transmission de messages de type point-à-multipoint entre utilisateurs de ce réseau, c'est-à-dire permettant à un utilisateur de ce réseau de diffuser des informations vers un ensemble d'autres utilisateurs de ce réseau. A titre d'exemple d'applications d'un tel service de type point-à-multipoint, on peut citer, notamment, la mise à jour en temps réel et par les utilisateurs eux-mêmes des informations diffusées grâce au service SMS-CB, la possibilité de communiquer avec un groupe d'utilisateurs (application du type "communication de groupe"), la possibilité de communiquer incognito avec d'autres utilisateurs,....etc.

Un autre but de la présente invention consiste à fournir un tel service de type point-à-multipoint, à moindre coût, en utilisant au mieux les infrastructures existantes.

La présente invention a ainsi pour objet un système permettant de diffuser des messages à partir d'un terminal dans un réseau de radiocommunications mobiles offrant, outre un service de transmission de messages de type point-à-point, un service de diffusion de messages à partir du réseau lui-même, ce système étant essentiellement caractérisé en ce qu'il comporte des moyens pour indiquer qu'un message de type point-à-point issu d'un terminal est à diffuser, et des moyens réagissant à une telle indication pour transformer ce message de type point-à-point en un message à diffuser par ce réseau.

Dans un système de radiocommunications mobiles dans lequel ce réseau coopère en outre avec des éléments extérieurs appelés centre de service de messages et centre de diffusion de messages, pour offrir lesdits services de transmission de messages de type point-à-point et de diffusion de messages, la présente invention a également pour objet un tel centre de service de messages et un tel centre de diffusion de messages, destinés à la mise en oeuvre d'un tel système de diffusion de messages.

La présente invention a également pour objet un terminal de radiocommunication mobile destiné à être utilisé dans un tel système de diffusion de messages.

D'autres objets et caractéristiques de la présente invention apparaîtront à la lecture àe la description suivante d'un exemple de réalisation, faite en relation avec les dessins ci-annexés dans lesquels:
- la figure 1 rappelle le principe de la transmission de messages courts de type point-à-point, suivant le service dit SMS-PP offert par le réseau GSM,
- la figure 2 rappelle le principe de la diffusion de messages courts, suivant le service dit SMS-CB offert par le réseau GSM,
- la figure 3 illustre le principe de la diffusion de messages, notamment de messages courts, suivant l'invention, à titre d'exemple dans le réseau GSM,
- la figure 4 illustre de manière plus détaillée les moyens mis en oeuvre pour assurer une telle diffusion de messages, notamment de messages courts, suivant l'invention,
- la figure 5 est un schéma destiné à illustrer un exemple de terminal suivant l'invention, permettant une telle diffusion de messages, notamment de messages courts, suivant l'invention.

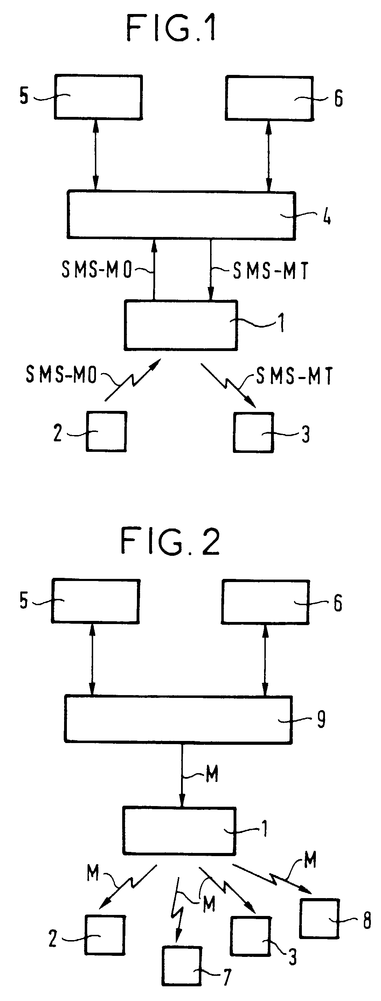

Sur la figure 1 est illustré un réseau de radiocommunications mobiles 1 constitué à titre d'exemple par un réseau GSM, apte à communiquer avec des terminaux mobiles tels que 2 et 3, et avec un élément extérieur 4 appelé centre de service de messages courts, ou SC en abrégé dans ce qui suit (pour:"Service Center"), ce dernier étant en outre apte à communiquer avec un ou plusieurs autres réseaux offrant des services de transmission de données, tels que , à titre d'exemple, le réseau téléphonique commuté (ou RTC) 5, et le réseau numérique à intégration de services (ou RNIS) 6.

De manière connue, la transmission d'un message court à partir d'un terminal tel que le terminal 2 par exemple comporte:
- la transmission de ce message court du terminal 2 au SC 4, par l'intermédiaire du réseau 1, en l'occurrence en utilisant un canal de signalisation particulier de ce réseau, constitué par le canal SDCCH ( pour:"Standalone Dedicated Control CHannel ), le message court ainsi transmis étant aussi appelé message SMS-MO (pour: "Short Message Service - Mobile Originating"),
- le traitement de ce message SMS-MO, par le SC 4, pour le transformer en un message destiné à être émis vers le terminal destinataire, ce terminal destinataire pouvant être soit celui d'un utilisateur du réseau 1, tel que le terminal 3 par exemple, auquel cas le message ainsi obtenu est aussi appelé message SMS-MT (pour: "Short Message Service - Mobile Terminating"), soit celui, non illustré spécifiquement, d'un utilisateur d'un autre réseau, tel que les réseaux 5 ou 6 par exemple.

Un message SMS-MT est en outre transmis du SC 4 au terminal destinataire, tel que le terminal 3 par exemple, par l'intermédiaire du réseau 1, en utilisant le même canal de signalisation SDCCH, mais dans l'autre sens.

Egalement de manière connue, un message SMS-MO comporte, outre des informations utiles, des données de contrôle comportant notamment une identification du destinataire de ce message (ou "DA", pour: "Destination Address"), ainsi qu'une identification du service de transmission de données utilisé par le terminal destinataire et/ou du réseau offrant ce service de transmission de données (ou "PID", pour :"Protocol Identifier").

Sur la figure 2 est illustré le même réseau 1 apte à communiquer avec des terminaux mobiles tels que 2, 3, 7 ou 8, ainsi qu'avec un élément extérieur 9 appelé centre de diffusion de messages courts, ou CBC en abrégé dans ce qui suit (pour:"Cell Broadcast Center"), lui-même apte à recevoir, via un ou plusieurs autres réseaux offrant des services de transmission de données, tels que par exemple les réseaux 5 ou 6, des informations à diffuser.

De manière connue, la diffusion d'un message court M du CBC 9 vers les différents terminaux tels que 2, 3, 7 et 8 présents dans une zone géographique donnée comporte l'émission de ce message par le réseau 1, en l'occurrence en utilisant un canal de diffusion particulier, appelé aussi "BCCH" (pour: "Broadcast Control CHannel") porté par une fréquence dite fréquence balise émise en permanence par ce réseau.

Egalement de manière connue, un tel message comporte, outre des informations utiles, des données de contrôle comportant notamment une identification de la source de ce message (ou "Message Identifier"), permettant aux utilisateurs de déterminer, ou plutôt de faire déterminer automatiquement par leur terminal, ceux qui les intéressent, et d'ignorer les autres, notamment à des fins d'économie d'énergie consommée par ces terminaux. Chacune de ces sources correspond en pratique à un numéro de sous-canal de diffusion, ces différents sous-canaux de diffusion se partageant, par multiplexage temporel, ledit canal de diffusion BCCH. Ces données de contrôle comportent en outre une identification, par un numéro d'ordre (ou "Serial Number"), de chacun des messages émis successivement sur un sous-canal de diffusion donné, et une identification de la zone géographique (ou "Geographical Scope") sur laquelle un tel message doit être diffusé (cette zone géographique pouvant être, par ordre décroissant, le réseau lui-même, un ensemble de cellules de ce réseau, appelé aussi zone de localisation (ou "Location Area" en anglais), ou une seule cellule de ce réseau.

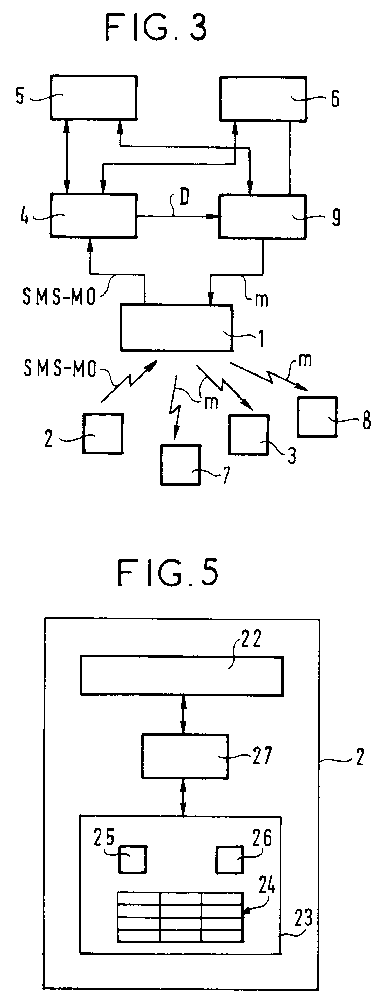

La figure 3 illustre le principe de transmission de messages courts suivant l'invention. Sur cette figure est illustré le même réseau 1 apte à communiquer avec les mêmes terminaux tels que 2, 3, 7 ou 8, ainsi qu'avec un centre de service de messages courts, tel que le SC 4, et avec un centre de diffusion de messages courts tel que le CBC 9, ces deux derniers éléments étant eux-mêmes apte à communiquer avec un ou plusieurs autres réseaux offrant des services de transmission de données, tels que par exemple les réseaux 5 ou 6.

La diffusion par le réseau 1 d'un message court transmis par l'un de ces terminaux, tel que le terminal 2 par exemple, comporte les étapes suivantes:
- transmission de ce message court du terminal 2 au SC 4, par l'intermédiaire du réseau 1, suivant le principe rappelé plus haut de transmission d'un message SMS-MO,
- élaboration par le SC 4 de données correspondantes, notées D, nécessaires pour permettre au CBC 9 d'élaborer un message correspondant "m" à diffuser par le réseau 1,
- transmission des données D du SC 4 au CBC 9,
- élaboration par le CBC 9, à partir des données D ainsi transmises, du message "m" à diffuser par le réseau 1,
- diffusion de ce message "m" par le réseau 1, cette diffusion étant effectuée suivant le principe rappelé plus haut en relation avec le service SMS-CB.

Avantageusement, les données de contrôle contenues dans un message de type SMS-MO, et donc introduites au moment de la composition de ce message, contiennent des données de contrôle spécifiques au nouveau service de type point-à-multipoint ainsi proposé, notamment des données de contrôle destinées à indiquer si les informations utiles contenues dans ce message sont, ou non, à diffuser par le réseau 1.

Avantageusement, le fait qu'un tel message de type SMS-MO est à diffuser par le réseau 1 pourra être indiqué par une combinaison particulière, non encore attribuée, des bits constitutifs des données de contrôle dites "PID" (pour: "Protocol Identifier").

Des données de contrôle peuvent en outre être utilisées, dans le message diffusé "m", pour permettre aux utilisateurs destinataires de tels messages de déterminer (ou plutôt de faire déterminer automatiquement par leur terminal) si ces messages les intéressent ou non, en vue, comme rappelé plus haut, de réaliser des économies d'énergie consommée par ces terminaux. De telles données de contrôle sont alors, comme indiqué plus haut, constituées par un numéro de sous-canal de diffusion qui peut être par exemple introduit dans le message de type SMS-MO (soit dans les informations utiles, soit, le cas échéant, dans des données de contrôle spécifiques) au moment de la composition de ce message, ou qui peut aussi être fourni par le SC 4 par exemple en fonction de données d'identification d'utilisateur contenues dans une base de données de ce SC 4. Un tel numéro de sous-canal de diffusion peut en outre être un numéro déjà existant (ce qui sera le cas notamment pour des applications du type mise à jour des informations diffusées grâce au service SMS-CB), ou un nouveau numéro, créé pour d'autres types d'applications de ce nouveau service de transmission de type point-à-multipoint.

Des données de contrôle peuvent en outre être utilisées dans le message diffusé "m" pour indiquer le type de zone géographique dans lequel ce message est à diffuser. De telles données de contrôle peuvent par exemple être fournies par le SC 4 après interrogation du réseau 1 ( plus précisément d'une base de données de ce réseau appelée VLR, pour: "Vistors Location Register") pour connaître la zone géographique dans laquelle se trouve l'utilisateur ayant émis ce message, suivant une procédure similaire à celle qui est actuellement utilisée pour connaître la zone géographique dans laquelle se trouve l'utilisateur destinataire d'un tel message, dans le cas où un message SMS-MT correspondant est à émettre.

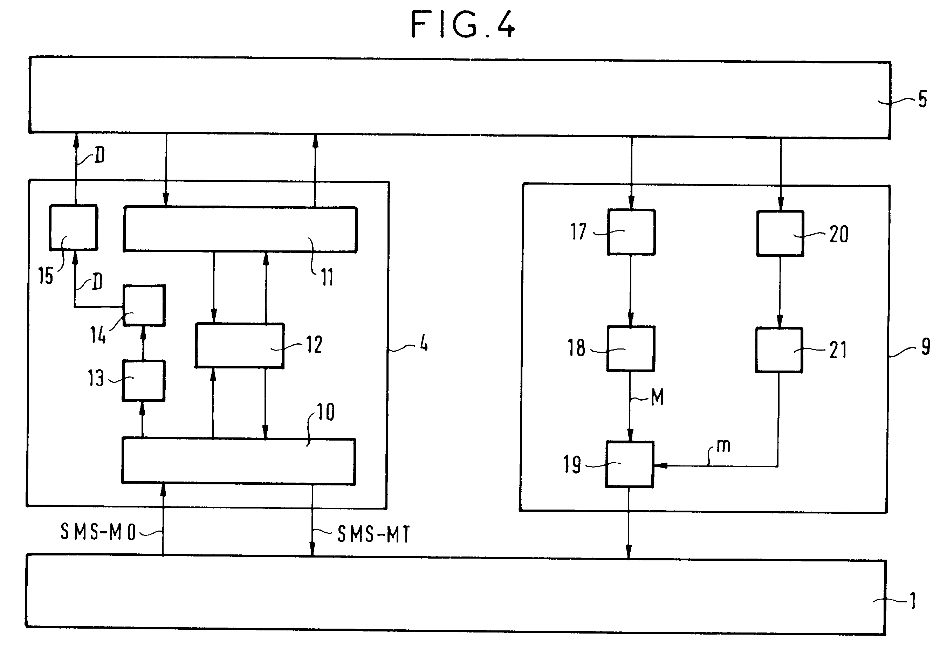

La figure 4 illustre de manière plus détaillée les moyens mis en oeuvre pour assurer une transmission de messages suivant l'invention.

Le SC 4 comporte, de manière connue :
- des moyens 10 d'interface avec le réseau 1 réalisant la réception de messages SMS-MO et l'émission de messages SMS-MT correspondants obtenus par transformation de ces messages SMS-MO,
- des moyens 11 d'interface avec un ou plusieurs autres réseaux offrant des services de transmission de données, tel que par exemple le réseau 5, permettant la réception, via de tels réseaux, de messages à transformer en messages SMS-MT, ou l'émission, via de tels réseaux, de messages obtenus par transfomation de messages SMS-MO,
- des moyens 12 permettant d'effectuer de telles transformations de messages.

Le SC 4 comporte en outre, suivant l'invention :
- des moyens 13 d'analyse des données de contrôle spécifiques au nouveau service de type point-à-multipoint ainsi proposé, contenues dans les messages SMS-MO reçus, notamment en vue de déterminer si les informations utiles contenues dans ces messages sont, ou non, à diffuser par le réseau 1, suivant ce nouveau service de transmission de type point-à-multipoint,
- des moyens 14 permettant, dans le cas où ces informations utiles sont effectivement à diffuser par le réseau 1, d'élaborer des données D nécessaires pour permettre au CBC 9 d'élaborer à son tour un message "m" à diffuser par le réseau 1,
- des moyens 15 d'interface avec des moyens de transmission utilisés pour transmettre de telles données D au CBC 9.

Le CBC 9 comporte de même, de manière connue:
- des moyens 17 d'interface avec un ou plusieurs autres réseaux, tel que par exemple le réseau 5, permettant la réception, par ce CBC, d'informations à diffuser par le service SMS-CB,
- des moyens 18 d'élaboration, à partir d'informations ainsi reçues, de messages M correspondants à diffuser par le réseau 1,
- des moyens 19 d'interface avec le réseau 1 permettant la transmission de messages M ainsi élaborés.

Le CBC 9 comporte en outre, suivant l'invention:
- des moyens 20 d'interface avec les moyens de transmission utilisés pour transmettre les données D au CBC 9,
- des moyens 21 permettant, à partir des données D ainsi reçues, d'élaborer les messages "m" à transmettre au réseau 1, en l'occurrence par l'intermédiaire des moyens d'interface 19.

Les données D comportant, outre les informations utiles à diffuser, des données de contrôle des messages à diffuser contenant ces informations utiles, les moyens 14 peuvent en outre opérer simplement, pour l'obtention desdites informations utiles à diffuser, par extraction des informations utiles des messages reçus de type SMS-MO, et, pour l'obtention desdites données de contrôle des messages à diffuser, par exemple suivant les principes exposés précédemment.

Par ailleurs, la réalisation des moyens 13 ne posant pas de problème particulier à l'homme du métier, ceux-ci ne seront pas décrits de manière plus détaillée.

La réalisation des moyens 21 ne posant pas non plus de problème particulier à l'homme du métier au vu de ce qui précède, ceux-ci ne seront pas non plus décrits de manière plus détaillée.

Les moyens de transmission des données D du SC 4 au CBC 9 peuvent être constituées par tout moyen; dans l'exemple illustré, ces données sont transmises, suivant des principes connus et par conséquent non rappelés ici, via l'un desdits autres réseaux, tel que le RTC 5 par exemple, auquel cas les moyens d'interface 15 et 20 sont des moyens, classiques, d'interface avec ce réseau.

L'ensemble formé par les moyens 14, 15, 5, 20 et 21 forme ainsi, dans l'exemple de réalisation décrit, des moyens permettant de transformer un message de type point-à-point issu d'un terminal en un message à diffuser par le réseau 1.

En outre, dans l'exemple de réalisation décrit, l'ensemble formé par les moyens 13 et par d'autres moyens contenus dans les terminaux mobiles et permettant de saisir lesdites données de contrôle spécifiques au nouveau service de type point-à-multipoint ainsi proposé, forme ainsi des moyens pour indiquer qu'un message de type point-à-point issu d'un terminal est à diffuser par le réseau 1.

On décrit maintenant un exemple de réalisation de tels moyens de saisie de données de contrôle spécifiques, correspondant au cas de terminaux comportant une interface homme-machine permettant d'accroître le confort d'utilisation en évitant à l'utilisateur d'avoir à entrer lui-même, sous forme codée, les données de contrôle des messages de type SMS-MO, mais en lui proposant diverses options, en clair, qu'il ne lui reste plus alors qu'à valider ou non, selon le cas. Lesdits moyens de saisie desdites données de contrôle spécifiques peuvent alors comporter des moyens pour proposer des options en clair à l'utilisateur, telles que notamment l'option "Message à diffuser", et des moyens pour permettre à l'utilisateur de valider ou non ces options, selon le cas.

Sur la figure 5 est ainsi illustré un terminal, tel que le terminal 2 par exemple, comportant, à titre d'exemple, un afficheur 22 pour afficher une telle option, ainsi qu'un clavier 23 comportant notamment, outre un ensemble 24 de touches alphanumériques, une touche telle que par exemple une touche de navigation 25 permettant d'accéder à un menu proposant une telle option et de se déplacer à l'intérieur de ce menu, et une autre touche de fonction 26 permettant de valider une option ainsi sélectionnée au moyen de cette touche de navigation, l'ensemble étant, de manière classique, géré par des moyens de traitement de données 27 tels que notamment un microprocesseur.

## Revendications

1. Système permettant de diffuser des messages à partir d'un terminal dans un réseau de radiocommunications mobiles offrant, outre un service de transmission de messages de type point-à-point, un service de diffusion de messages à partir du réseau lui-même, ce système étant caractérisé en ce qu'il comporte des moyens (13, 22, 23, 24, 25, 26) pour indiquer qu'un message de type point-à-point issu d'un terminal (2) est à diffuser, et des moyens (14, 15, 5, 20, 21) réagissant à une telle indication pour transformer ce message de type point-à-point en un message à diffuser par ce réseau (1).

2. Système selon la revendication 1, caractérisé en ce que, ledit réseau coopérant, pour ledit service de type point-à-point, avec un élément extérieur appelé centre de service de messages (4), et pour ledit service de diffusion, avec un élément extérieur appelé centre de diffusion de messages (9), lesdits moyens pour transformer un message de type point-à-point en un message à diffuser par ce réseau comportent :
- dans ledit centre de service de messages:
-- des moyens (14) permettant d'élaborer des données (D) nécessaires pour permettre au centre de diffusion de messages (9) d'élaborer à son tour un message ("m") à diffuser par ledit réseau (1),
-- des moyens (15) d'interface avec des moyens de transmission de telles données (D) audit centre de diffusion de messages (9),
- dans ledit centre de diffusion de messages :
-- des moyens (20) d'interface avec lesdits moyens de transmission de données (D) audit centre de diffusion de messages (9),
-- des moyens (21) permettant, à partir des données (D) ainsi reçues, d'élaborer les messages ("m") à transmettre audit réseau (1), pour diffusion.

3. Système selon la revendication 2, caractérisé en ce que, ledit centre àe service de messages (4) et ledit centre de diffusion de messages (9) étant en outre aptes à communiquer avec au moins un autre réseau (5, 6) offrant également des services de transmission de données, lesdits moyens de transmission de données (D) utilisent un tel réseau.

4. Système selon l'une des revendications 1 à 3, caractérisé en ce que, lesdits messages de type point-à-point comportant, outre des informations dites utiles, des informations dites de contrôle, lesdits moyens pour indiquer qu'un message de type point-à-point est à diffuser comportent :
- dans lesdits terminaux, des moyens de saisie de données de contrôle spécifiques à la diffusion de messages à partir de terminaux,
- dans ledit centre de service de messages, des moyens (13) d'analyse de telles données de contrôle spécifiques.

5. Centre de service de messages pour la mise en oeuvre d'un système selon l'une des revendications 2 à 4, caractérisé en ce qu'il comporte:
-- des moyens (14) permettant d'élaborer des données (D) nécessaires pour permettre au centre de diffusion de messages (9) d'élaborer à son tour un message ("m") à diffuser par ledit réseau (1),
-- des moyens (15) d'interface avec des moyens de transmission de telles données (D) audit centre de diffusion de messages.

6. Centre de service de messages pour la mise en oeuvre d'un système selon la revendication 4, caractérisé en ce qu'il comporte des moyens (13) d'analyse desdites données de contrôle spécifiques.

7. Centre de diffusion de messages, pour la mise en oeuvre d'un système selon l'une des revendications 2 à 4, caractérisé en ce qu'il comporte :
-- des moyens (20) d'interface avec lesdits moyens de transmission de données (D) audit centre de diffusion de messages (9),
-- des moyens (21) permettant, à partir des données (D) ainsi reçues, d'élaborer les messages ("m") à transmettre audit réseau (1), pour diffusion.

8. Terminal de radiocommunication mobile, pour la mise en oeuvre d'un système selon la revendication 4, caractérisé en ce qu'il comporte des moyens (22, 23, 24, 25, 26) de saisie desdites données de contrôle spécifiques.
